# EUROPEAN PATENT APPLICATION

(11) **EP 2 645 206 A1**
(43) Date of publication of application: **02.10.2013**
(21) Application number: 12161179.2
(22) Date of filing: 26.03.2012
(51) Int. Cl.: G06F 3/02, G06F 3/041

(54) **Apparatus pertaining to a multi-modality user-input standalone accessory**

(71) Applicant: BlackBerry Limited, Waterloo ON N2L 3W8 (CA)
(72) Inventor: Paschke, Brian Dennis, Mississauga, Ontario L4W 0B5 (CA); Wood, Todd Andrew, Waterloo, Ontario N2L 3L3 (CA); Matsumoto, Ippei, London EC1M 5UA (GB); Colin, Kimberlee, London EC1M 5UA (GB); Hecht, Samuel, London EC1M 5UA (GB); Von Lintel, Philipp, London EC1M 5UA (GB)
(74) Representative: Bryn-Jacobsen, Caelia

(57) **Abstract**

A standalone accessory by which a user inputs information into a primary apparatus (such as a portable electronic device) comprises a housing having a first side and an opposing, second side. A mechanical keyboard is disposed on the first side of the housing and a touch-sensitive planar surface is disposed on the second side of the housing.

## Description

### Field of Technology

The present disclosure relates to standalone accessories, including but not limited to accessory keyboards configured for use with portable electronic devices.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), laptop computers with wireless 802.11 or Bluetooth capabilities; and a variety of tablet-based computers.

Portable electronic devices such as PDAs or smart telephones are generally intended for handheld use and ease of portability. Smaller devices are generally desirable for portability. Unfortunately, this typically leads to design compromises with respect to the number, type, and size of user-input interfaces that comprise a part of the portable electronic device. For example, the only keyboard provided as an integral part of a given portable electronic device may comprise a virtual keyboard offered via a touch-sensitive display. In other cases, the keyboard may comprise a mechanical keyboard that is so small that the user typically types using only their thumbs.

Though sufficient for many application settings, such approaches nevertheless sometimes fail to meet the needs of a given user at a given time. As a result, standalone user-input accessories are sometimes offered to provide the user with user-input interfaces of different modalities and/or sizes as compared to the native user-input interfaces of their portable electronic device. The use of standalone accessories, however, can give rise to other problems. For example, as the user acquires and carries a plurality of different standalone accessories in order to have a corresponding desired variety of user-input modalities, the small size and portability of their portable electronic device becomes more ironic than purposefully useful.

### Brief Description of the Drawings

FIG. 1 is a block diagram in accordance with the disclosure.

FIG. 2 is a perspective view in accordance with the disclosure.

FIG. 3 is a block diagram in accordance with the disclosure.

### Detailed Description

The following describes an apparatus comprising a standalone accessory by which a user inputs information into a primary apparatus (such as a portable electronic device). The standalone accessory comprises a housing having a first side and an opposing, second side. A mechanical keyboard is disposed on the first side of the housing and a touch-sensitive planar surface is disposed on the second side of the housing.

So configured, a single standalone accessory will support at least two user-input modalities while requiring only a modest work-surface footprint that directly corresponds to only one of the user-input modalities. This reduces both the number of standalone accessories that need be acquired and carried by a user and also the working size of the standalone accessory. Accordingly, these teachings support the diminutive and portable nature of the user's primary apparatus while nevertheless augmenting the user-input opportunities as correspond to that primary apparatus.

By one approach the mechanical keyboard can comprise a QWERTY keyboard of a size sufficient to permit standard ten-finger touch typing. If desired, the aforementioned housing includes at least one portion that is disposed further perpendicularly outwardly of the housing's first side than the keys of the mechanical keyboard. So configured, the keyboard's keys will not contact a planar surface (such as a desktop or tabletop) upon which the user places the standalone accessory when accessing the touch-sensitive planar surface on the second side of the housing.

If desired, the standalone accessory can further include an orientation sensor. So configured, the standalone accessory can automatically select between the mechanical keyboard and the touch-sensitive planar surface as a present user-input modality as a function of the housing's orientation. For example, when the housing is oriented with the second side facing downwardly, the output of the mechanical keyboard can be automatically selected as the user output of the standalone accessory to provide to the user's primary apparatus.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

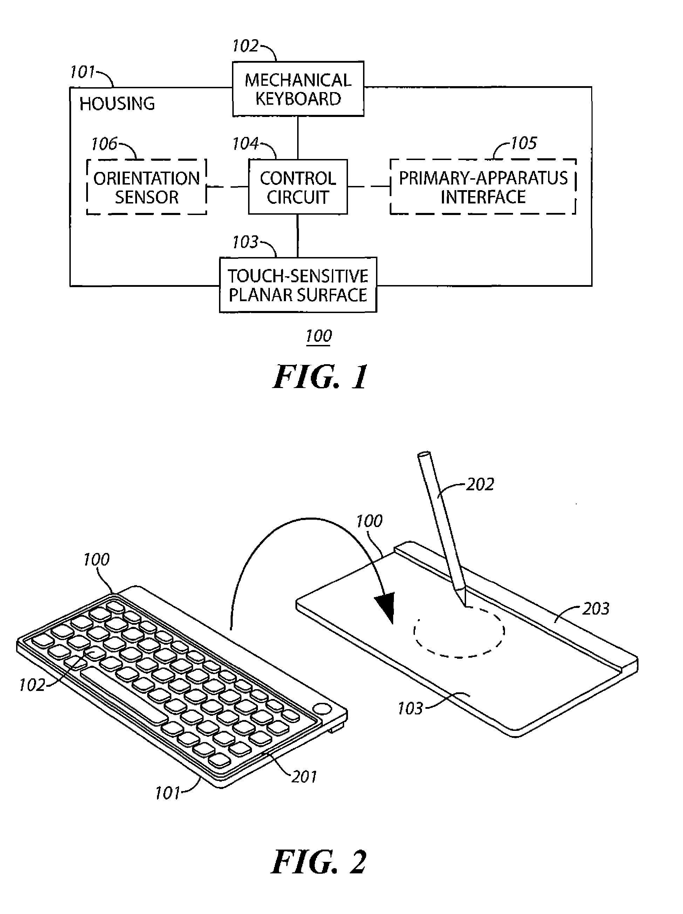

FIG. 1 presents a standalone accessory 100. As used herein, this reference to "standalone" will be understood to refer to a component that is, and remains during use, physically separate from a corresponding primary apparatus (apart from the minimal requirements of a physical connection to facilitate necessary communications such as a multi-wire or fiber-optic tether). Accordingly, a component is not considered "standalone" if that component is an integral part of the primary apparatus (during ordinary non-use and/or use with the primary apparatus). A component is also not considered "standalone" if that component is more significantly physically coupled to the primary apparatus than is required to accommodate the aforementioned communication. For example, a component that nests in the primary apparatus or that utilizes the primary apparatus as a dock is not a "standalone" component.

Also as used herein, this reference to an "accessory" will be understood to refer to a component that is not necessary to at least some core functionality of the primary apparatus. By way of example, when the primary apparatus comprises a portable electronics device having a touch-screen display that offers a virtual QWERTY keyboard, a mechanical keyboard that communicatively couples to the primary apparatus (via, say, a data-bearing cable or a short-range wireless connection) offers convenience and ease of interaction to the user, and that even may support accessing some functionality of the primary apparatus that isn't ordinarily available, would qualify as an "accessory."

This standalone accessory 100 comprises a housing 101 having a first side and an opposing, second side. A mechanical keyboard 102 is disposed on the first side of the housing and a touch-sensitive planar surface 103 is disposed on the second side of the housing 101. This reference to "mechanical" will be understood to refer to a keyboard having individual keys that each comprise one or more individual moving parts (such as but not limited to dome switches as are commonly employed in these regards). By one approach this mechanical keyboard 101 comprises, at the least, a full QWERTY keyboard of sufficient size to accommodate ordinary typing using both hands.

The touch-sensitive planar surface 103 can comprise, for example, a touch pad. So configured, this touch-sensitive planar surface 103 will support, for example, writing input, sketched input, and so forth (using, for example, an appropriate stylus).

So configured, a user can select between using the mechanical keyboard 102 and the touch-sensitive planar surface 103 when entering data. This selection may be evinced as simply as turning the housing 101 upside down from a present orientation in order to reveal the desired user-interface modality.

To aid in these and other regards, the standalone accessory 100 can further include, if desired, a control circuit 104 that operably couples to the mechanical keyboard 102 and the touch-sensitive planar surface 103. The control circuit 104, in turn, can communicatively couple to an optional primary-apparatus interface 105. The primary-apparatus interface 105 can comprise, for example, a wireless interface (such as, but not limited to, a short-range wireless transceiver such as a Bluetooth-compatible transceiver or an infrared carrier-based wireless transceiver) or a tethered interface of choice. So configured, the control circuit 104 can forward user input from the mechanical keyboard 102 and touch-sensitive planar surface 103 to the primary apparatus via the primary-apparatus interface 105.

By one approach, and again if desired, the standalone accessory 100 can optionally include an orientation sensor 106 that also operably couples to the control circuit 104. This orientation sensor 106 can include any of a variety of such components including but not limited to mercury tilt switches, accelerometers, and so forth. So configured, the control circuit 104 can be configured to detect whether the housing 101 is oriented with its first side (and hence the mechanical keyboard 102) right side up or with its second side (and hence the touch-sensitive planar surface 103) right side up. The control circuit 104, in turn, can be configured to utilize this information to automatically select between the mechanical keyboard 102 and the touch-sensitive planar surface 103 as a function of the orientation of the housing 101.

FIG. 2 provides a more specific example in these regards. It will be understood that the specifics of this example are not intended to suggest any particular limitations in these regards.

In this illustrative example the mechanical keyboard 102 comprises a full QWERTY keyboard of a size sufficient to permit and accommodate ordinary two-handed typing. The housing 101 includes a portion 201 that is disposed further outwardly of the housing's first side than are the keys of the mechanical keyboard 102. This portion 201, in this example, encircles and therefore fully encompasses the mechanical keyboard 102. So configured, this portion 201 of the housing 101 will be the part of the housing 101 that contacts a planar surface when the housing 101 is placed first side-down on that planar surface. Accordingly, the keys of the keyboard 102 will not contact that planar surface in this orientation. Accordingly, the keys of the keyboard 102 are less likely to be inadvertently asserted and less likely to be damaged or subjected to excessive wear.

For its part, in this example the touch-sensitive planar surface 103 comprises a substantial portion of the second side of the housing 101. More particularly, in this illustrated example, the touch-sensitive planar surface 103 comprises at least ninety percent of the second side of the housing 101. So configured a user can employ, for example, a stylus 202 to enter sketched images into the primary apparatus.

Also in this illustrative example, a battery compartment 203 protrudes perpendicularly outwardly of the second side of the housing 101 further than the planar surface of the touch-sensitive planar surface 103. So configured, the battery compartment serves to prop the second side of the housing 101 away from a planar surface (such as a table top) upon which the housing 101 rests to thereby help to protect the touch-sensitive planar surface 103 from unwanted contact. This orientation also helps to provide an ergonomically-useful slant to the mechanical keyboard 102 when the housing 101 rests second side down.

In this illustrative example, the standalone accessory 100 is an apparatus that comprises only a user-input interface accessory. The present teachings are applicable beyond that limited application setting, however, as desired.

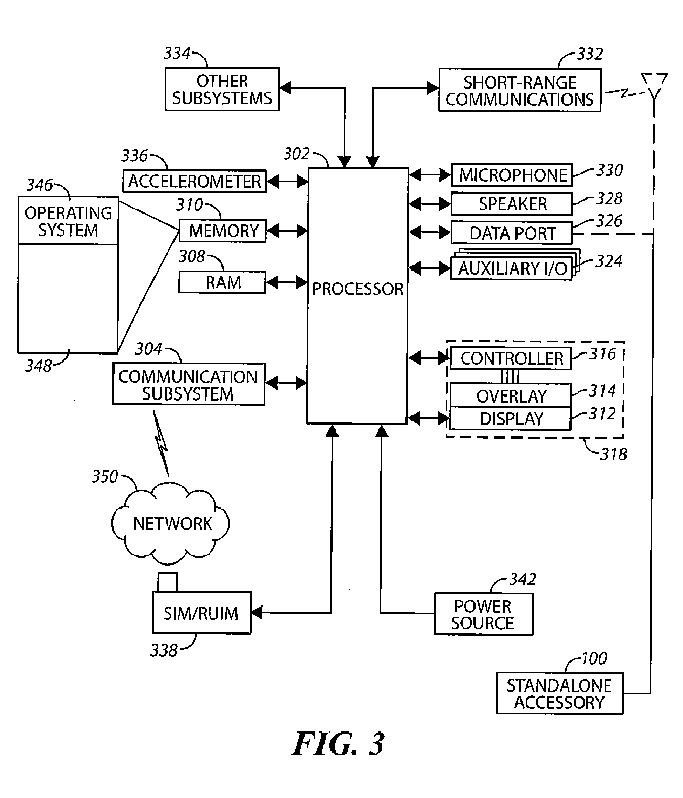

The primary apparatus with which the standalone accessory 100 interacts can of course vary as desired. By one approach the primary apparatus comprises a portable communications device. With reference to FIG. 3, an exemplary portable electronic device includes a processor 302 that controls the overall operation of the portable electronic device. Communication functions, including data and voice communications, are performed through a communication subsystem 304. The communication subsystem receives messages from and sends messages to a wireless network 350. The wireless network 350 may be any type of wireless network, including, but not limited to, data wireless networks, voice wireless networks, and networks that support both voice and data communications. A power source 342, such as one or more rechargeable batteries or a port to an external power supply, powers the electronic device.

The processor 302 interacts with other elements, such as Random Access Memory (RAM) 308, memory 310, a display 312 with a touch-sensitive overlay 314 operably coupled to an electronic controller 316 that together comprise an optional touch-sensitive display 318, an auxiliary input/output (I/O) subsystem 324, a data port 326 that accommodates, for example, a data-communication tether that couples to the standalone accessory 100, a speaker 328, a microphone 330, a short-range communication subsystem 332 that can also be configured to accommodate data interchanges with the standalone accessory 100, and other device subsystems 334 of choice.

One or more user interfaces are provided. Input via a graphical user interface is provided via the touch-sensitive overlay 314. The processor 302 interacts with the touch-sensitive overlay 314 via the electronic controller 316. Information, such as text, characters, symbols, images, icons, and other items that may be displayed or rendered on a portable electronic device, is displayed on the touch-sensitive display 318 via the processor 302.

The processor 302 may also interact with an accelerometer 336 that may be utilized to detect direction of gravitational forces or gravity-induced reaction forces.

To identify a subscriber for network access, the portable electronic device may utilize a Subscriber Identity Module or a Removable User Identity Module (SIM/RUIM) card 338 for communication with a network, such as the wireless network 350. Alternatively, user identification information may be programmed into the memory 310.

The portable electronic device includes an operating system 346 and software programs, applications, or components 348 that are executed by the processor 302 and are typically stored in a persistent, updatable store such as the memory 310. Additional applications or programs may be loaded onto the portable electronic device through the wireless network 350, the auxiliary I/O subsystem 324, the data port 326, the short-range communications subsystem 332, or any other suitable subsystem 334. The memory 310 may comprise a non-transitory storage media that stores executable code, which when executed causes one or more of functions or actions as described herein.

The present disclosure may be embodied in other specific forms without departing from its essential characteristics. For example, other user-interface modalities besides those described can certainly be accommodated as appropriate to the needs of a given application setting. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus (100) comprising:
a housing (101) having a first side and an opposing, second side;
a mechanical keyboard (102) disposed on the first side of the housing;
a touch-sensitive planar surface (103) disposed on the second side of the housing;
wherein the apparatus comprises a standalone accessory by which a user inputs information into a primary apparatus.

2. The apparatus of claim 1 wherein the mechanical keyboard comprises, at least in part, a QWERTY keyboard.

3. The apparatus of claim 1 wherein the touch-sensitive planar surface comprises a touch pad.

4. The apparatus of claim 1 further comprising:
a primary-apparatus interface that operably couples to the mechanical keyboard and the touch-sensitive planar surface and that is disposed within the housing.

5. The apparatus of claim 4 wherein the primary-apparatus interface comprises at least one of a wireless interface and a tethered interface.

6. The apparatus of claim 1 further comprising:
an orientation sensor that is configured to respond to an orientation of the housing;
a control circuit that is responsive to the orientation sensor and that is configured to select between the mechanical keyboard and the touch-sensitive planar surface as a function of the orientation of the housing.

7. The apparatus of claim 1 wherein the housing includes at least one portion that is disposed further outwardly of the housing's first side than keys of the mechanical keyboard such that the keys do not contact a planar surface when the housing is placed first side-down on the planar surface.

8. The apparatus of claim 7 wherein the one portion at least partially encompasses the mechanical keyboard.

9. The apparatus of claim 8 wherein the one portion fully encompasses the mechanical keyboard.

10. The apparatus of claim 1 wherein the primary apparatus comprises a portable communications device.

11. The apparatus of claim 10 wherein the apparatus comprises a user-input interface accessory.

12. The apparatus of claim 11 wherein the apparatus comprises only a user-input interface accessory.

13. The apparatus of claim 1 wherein the touch-sensitive planar surface comprises at least a substantial portion of the second side of the housing.
